# EUROPÄISCHE PATENTSCHRIFT

(11) **EP 2 447 131 B1**
(45) Veröffentlichungstag und Bekanntmachung des Hinweises auf die Patenterteilung: **16.04.2014**
(21) Anmeldenummer: 11186627.3
(22) Anmeldetag: 26.10.2011
(51) Int. Cl.: B61D 35/00

(54) **Ventilanordnung für die Abfuhr eines flüssigen Mediums und Verfahren zur Steuerung einer Ventilanordnung**
Valve assembly for the removal of a liquid medium and method for controlling a valve assembly
Ensemble vanne pour l'évacuation d'un liquide et procédé de commande d'un ensemble vanne

(30) Priorität: 26.10.2010 DE 202010014643 U
(43) Veröffentlichungstag der Anmeldung: 02.05.2012
(73) Patentinhaber: Evac GmbH, 22880 Wedel (DE)
(72) Erfinder: Matzke, Arne, 22880 Wedel (DE); Autzen, Matthias, 22880 Wedel (DE); Bernecker, Arne, 22880 Wedel (DE); Starl, Oliver, 22880 Wedel (DE)
(74) Vertreter: Eisenführ Speiser

(56) Entgegenhaltungen:
- EP-A1- 1 715 228
- EP-A2- 1 447 485
- CN-A- 101 839 014
- DE-A1-102007 004 832
- DE-A1-102007 061 255
- DE-A1-102008 007 748
- DE-A1-102009 010 862

## Beschreibung

Die Erfindung betrifft eine Ventilanordnung zur Abfuhr eines flüssigen Mediums, umfassend eine Einlassöffnung, eine Auslassöffnung, ein in Einbaulage zwischen der Einlass- und der Auslassöffnung angeordnetes, ansteuerbares Durchflussverhinderungsventil, und eine Steuerungsvorrichtung, die ausgebildet ist, das Durchflussverhinderungsventil für den Durchfluss des flüssigen Mediums freizugeben oder zu sperren.

Weiterhin betrifft die Erfindung ein Verfahren zur Steuerung einer Ventilanordnung, umfassend die Schritte: Freigeben eines Durchflussverhinderungsventils zur Abfuhr eines flüssigen Mediums, und Sperren des Durchflussverhinderungsventils.

Aus der DE 10 2008 007 748 A1 ist eine Ventilanordnung für gravitätische Flüssigkeitsabfuhr für die Abfuhr eines flüssigen Mediums aus einem gegenüber einer Umgebung druckgedämpften Raum in die Umgebung bekannt, welche ein Rückflussverhinderungsventil und ein Durchflussverhinderungsventil aufweist.

Ventilanordnungen der eingangs genannten Art und Verfahren zur Steuerung von Ventilanordnungen werden eingesetzt, um ein flüssiges Medium abzuführen, beispielsweise Abwasser oder Spülwasser. Das abzuführende flüssige Medium kann beispielsweise Spülwasser oder Abwasser sein, das mit durch Seifen gelösten Verschmutzungen, beispielsweise Schwebstoffen, vermischt ist. Das abzuführende flüssige Medium kann aber auch beispielsweise sauberes Spülwasser sein. Die Abfuhr erfolgt typischerweise aus einer Vorrichtung, in der abzuführendes flüssiges Medium anfällt, beispielsweise aus einem Spülbecken oder einem Urinal. In solchen Anwendungsgebieten der eingangs genannten Ventilanordnungen und des Verfahrens zur Steuerung fällt abzuführendes flüssiges Medium typischerweise nicht kontinuierlich an, sondern nur diskontinuierlich bei Benutzung der Vorrichtung und in einer je nach Benutzung unterschiedlichen Menge. Im Anschluss an eine Benutzung liegt ein Zeitraum, in dem aus einer solchen Vorrichtung kein flüssiges Medium abzuführen ist, der bis zu dem Zeitpunkt der nächsten Benutzung andauert, bei der wieder abzuführendes flüssiges Medium anfällt. Nachteilig ist, dass, in Abhängigkeit von dem abzuführenden flüssigen Medium und insbesondere bei Urinalen, für Benutzer eine deutliche Geruchsbelastung entstehen kann.

Es ist daher eine Aufgabe der vorliegenden Erfindung, eine Ventilanordnung und ein Verfahren zur Steuerung einer Ventilanordnung bereitzustellen, die diesen Nachteil reduzieren oder vermeiden.

Die Aufgabe wird erfindungsgemäß gelöst durch eine Ventilanordnung zur Abfuhr eines flüssigen Mediums, umfassend eine Einlassöffnung, eine Auslassöffnung, ein in Einbaulage zwischen der Einlass- und der Auslassöffnung angeordnetes, ansteuerbares Durchflussverhinderungsventil, und eine Steuerungsvorrichtung, die ausgebildet ist, das Durchflussverhinderungsventil für den Durchfluss des flüssigen Mediums freizugeben oder zu sperren, gekennzeichnet durch ein in Einbaulage zwischen der Einlass- und der Auslassöffnung und in Schwerkraftrichtung im Wesentlichen oberhalb des Durchflussverhinderungsventils angeordnetes Rückflussverhinderungsventil mit einem in Einbaulage in Schwerkraftrichtung im Wesentlichen nach unten weisenden Rückflussausgang, und weiterhin dadurch gekennzeichnet, dass die Steuerungsvorrichtung ausgebildet ist, das Durchflussverhinderungsventil derart zu sperren, dass ein Restanteil des abzuführenden Mediums in Schwerkraftrichtung im Wesentlichen oberhalb des Durchflussverhinderungsventils eine Sperrschicht bildet, deren Oberfläche in Schwerkraftrichtung im Wesentlichen oberhalb des Rückflussausgangs des Rückflussverhinderungsventils angeordnet ist.

Die erfindungsgemäße Ventilanordnung weist eine Einlassöffnung auf und eine Auslassöffnung, die vorzugsweise in Einbaulage in Schwerkraftrichtung im Wesentlichen unterhalb der Einlassöffnung angeordnet ist. Dazwischen befindet sich ein von einer Steuerungsvorrichtung ansteuerbares Durchflussverhinderungsventil, das den Durchfluss des flüssigen Mediums durch das Durchflussverhinderungsventil sperren und freigeben bzw. entsperren kann. Typischerweise wird das Durchflussverhinderungsventil von der Steuerungsvorrichtung freigegeben, wenn bei Benutzung einer Vorrichtung flüssiges Medium anfällt, das durch die Ventilanordnung abgeführt werden soll. Weiterhin vorzugsweise ist das Durchflussverhinderungsventil der Ventilanordnung durch die Steuerungsvorrichtung gesperrt, wenn kein flüssiges Medium anfällt. Das Sperren des Durchflussverhinderungsventils, wenn kein abzuführendes flüssiges Medium anfällt, ist insbesondere in der Anwendung der erfindungsgemäßen Ventilanordnung in Umgebungen von Vorteil, in denen Druckschwankungen auftreten können. Ein solches Anwendungsgebiet ist beispielsweise die Anwendung von Ventilanordnungen in Flüssigkeitsabfuhrleitungen bei Zügen. Solche Flüssigkeitsabfuhrleitungen führen ein flüssiges Medium aus einem gegenüber einer Umgebung druckgedämpften Raum in die Umgebung ab. Der druckgedämpfte Raum ist dabei beispielsweise ein Hochgeschwindigkeitswagon, bei dem typischerweise bei Tunneleinfahrten oder bei Zugbegegnungen kurzzeitig Druckdifferenzen gegenüber der Umgebung auftreten. Hierdurch kann es beispielsweise bei einem Überdruck in der Umgebung gegenüber dem druckgedämpften Raum zu einem Rückspülen des abzuführenden flüssigen Mediums in den druckgedämpften Raum oder zu einer Absaugwirkung bei einem Überdruck im druckgedämpften Raum gegenüber der Umgebung kommen. Es ist daher bevorzugt, bei Nichtbenutzung einer Vorrichtung, bei der abzuführendes flüssiges Medium anfällt, das Durchflussverhinderungsventil zu sperren.

Erfindungsgemäß ist, um die Rückspülsicherheit weiter zu verbessern, ein Rückflussverhinderungsventil vorgesehen, dass ebenfalls zwischen der Einlass- und der Auslassöffnung der Ventilanordnung angeordnet ist und sich in Einbaulage weiterhin in Schwerkraftrichtung im Wesentlichen oberhalb des Durchflussverhinderungsventils befindet. Dadurch ergibt sich der Vorteil, dass selbst wenn aufgrund eines Druckstoßes ein Rückspülen durch das Durchflussverhinderungsventil erfolgen sollte oder wenn sich oberhalb des Durchflussverhinderungsventils noch flüssiges Medium befindet, das Medium dann durch das Rückflussverhinderungsventil am Rückspülen durch die Einlassöffnung der Ventilanordnung gehindert wird. Das Rückflussverhinderungsventil hat einen Rückflussausgang, der in Einbaulage in Schwerkraftrichtung im Wesentlichen nach unten weist. Erfindungsgemäß ist die Steuerungsvorrichtung nun derart ausgebildet, dass das Durchflussverhinderungsventil gesperrt wird, bevor ein Restanteil des abzuführenden Mediums das Durchflussverhinderungsventil passiert hat. Auf diese Weise verbleibt der Restanteil des abzuführenden Mediums in Schwerkraftrichtung im Wesentlichen oberhalb des Durchflussverhinderungsventils und bildet dort eine Sperrschicht. Bei der Anwendung der erfindungsgemäßen Ventilanordnung in einem Urinal ist es beispielsweise besonders bevorzugt, dass der Restanteil des abzuführenden Mediums aus - vorzugsweise sauberem - nachlaufendem Spülwasser besteht.

Die Steuerungsvorrichtung kann dabei beispielsweise ausgebildet sein, das Durchflussverhinderungsventil in Abhängigkeit von der Menge des abzuführenden Mediums und/oder in Abhängigkeit von der zur Abfuhr des Mediums vorgesehenen Zeit zu steuern. Die Steuerungsvorrichtung kann beispielsweise auch ausgebildet sein, beim Sperren des Durchflussverhinderungsventils ein Signal zu erzeugen, das dazu dient, das nachfolgend abzuführende Medium auf eine dem Restanteil entsprechende Menge zu begrenzen, beispielsweise durch Sperren einer Zufuhrleitung.

Der Restanteil ist dabei vorzugsweise derart bemessen, dass die durch ihn gebildete Sperrschicht in Schwerkraftrichtung im Wesentlichen eine solche Ausdehnung hat, dass der Rückflussausgang des Rückflussverhinderungsventils in die Sperrschicht hineinragt bzw. in sie eintaucht. Die Sperrschicht ist hier als dreidimensionales Volumen zu verstehen, das der Restanteil des abzuführenden flüssigen Mediums unter Schwerkrafteinwirkung oberhalb des gesperrten Durchflussverhinderungsventils bildet.

Der Rückflussausgang des Rückflussverhinderungsventils befindet sich somit im gesperrten Zustand des Durchflussverhinderungsventils innerhalb der vom Restanteil des abzuführenden flüssigen Mediums gebildeten dreidimensionalen Sperrschicht. Luft, die sich oberhalb der Sperrschicht befindet, kann dadurch nicht durch den Rückflussausgang in das Rückflussverhinderungsventil gelangen. Insbesondere ist bevorzugt, dass als Restanteil nachlaufendes, möglichst sauberes Spülwasser verwendet wird, um die Geruchsbelastung weiter zu reduzieren.

Der Erfindung liegt dabei die Erkenntnis zugrunde, dass die Geruchsbelastung insbesondere durch Luft entsteht, die durch das Durchflussverhinderungsventil aus der Ventilanordnung oder einer hinter der Auslassöffnung der Ventilanordnung liegenden Abfuhrleitung zurückströmt. Durch das Eintauchen des Rückflussausgangs des Rückflussverhinderungsventils in die Sperrschicht kann dieser Rückstrom von geruchsbelastender Luft in konstruktiv einfacher Weise verhindert werden.

Ein weiterer Vorteil ist, dass die erfindungsgemäße Ventilanordnung eine besonders kompakte Baueinheit darstellt, bei der das Durchflussverhinderungsventil und das Rückflussverhinderungsventil vorzugsweise keinen großen Abstand voneinander aufweisen, sondern der Rückflussausgang des Rückflussverhinderungsventils nahe am Durchflussverhinderungsventil angeordnet ist, so dass der die Sperrschicht bildende Restanteil des abzuführenden Mediums klein gehalten werden kann. Vorzugsweise entspricht der Restanteil des flüssigen Mediums einer Menge von ca. 20 bis 50 ccm, insbesondere einer Menge von ca. 30 bis 40 ccm.

Die kompakte Ausbildung der erfindungsgemäßen Ventilanordnung hat weiterhin den Vorteil, dass sie einfach und schnell ausgetauscht werden kann, beispielsweise zu Wartungs- oder Reparaturzwecken. Gerade in einem Anwendungsgebiet wie Zügen ist dies von Vorteil, da längere Wartungs- oder Reparaturarbeiten auch entsprechende Stillstands- bzw. Ausfallzeiten eines Zuges bedeuten. Durch einen einfachen und schnellen Austausch einer gesamten fehlerhaften oder zu wartenden Ventilanordnung durch einen neue können die Stillstands- bzw. Ausfallzeiten minimiert werden.

Die Erfindung kann dadurch fortgebildet werden, dass das Rückflussverhinderungsventil umfasst: einen Rückflusseingang, eine vom Rückflusseingang zum Rückflussausgang weisende und sich in dieser Richtung verjüngende Flachtülle mit zwei Seitenwänden aus einem elastischen Material, und ein am Rückflusseingang des Rückflussverhinderungsventils oder an der Einlassöffnung angeordnetes, fluiddurchlässiges Sicherungselement.

Der Rückflusseingang des Rückflussverhinderungsventils ist vorzugsweise in Einbaulage im Wesentlichen in Schwerkraftrichtung im Wesentlichen oberhalb des Rückflussausgangs des Rückflussverhinderungsventils angeordnet. Die Flachtülle des Rückflussverhinderungsventils verjüngt sich demnach vorzugsweise in Einbaulage im Wesentlichen von oben nach unten. Das Rückflussverhinderungsventil lässt das abzuführende flüssige Medium unter Schwerkrafteinfluss vom Rückflusseingang zum Rückflussausgang durch. Dazu weist die Flachtülle in ihrem Inneren vorzugsweise einen Kanal zwischen dem Rückflusseingang und dem Rückflussausgang auf. Weiterhin vorzugsweise sind die Seitenwände der Flachtülle derart vorgespannt, dass sie in einer ersten Stellung zumindest abschnittsweise gegeneinander gepresst sind und somit der Kanal des Rückflussverhinderungsventils zumindest abschnittsweise verschlossen ist, wenn kein Medium durch den Rückflusseingang in das Rückflussverhinderungsventil fließt oder wenn Medium vom Rückflussausgang her auf das Rückflussverhinderungsventil trifft. Die Seitenwände sind weiterhin vorzugsweise derart vorgespannt, dass sie in einer zweiten Stellung zumindest abschnittsweise voneinander gelöst sind und somit der Kanal des Rückflussverhinderungsventils zumindest teilweise freigegen wird, wenn Medium durch den Rückflusseingang in das Rückflussverhinderungsventil fließt. Ein solches Rückflussverhinderungsventil ist vorzugsweise als Duckbill-Ventil ausgebildet.

In der bevorzugten Fortbildung ist eingangsseitig des Rückflussverhinderungsventils, d. h. am Rückflusseingang des Rückflussverhinderungsventils oder an der Einlassöffnung der Ventilanordnung (wobei der Rückflusseingang des Rückflussverhinderungsventils mit der Einlassöffnung der Ventilanordnung identisch sein kann), ein fluiddurchlässiges Sicherungselement angeordnet. Das Sicherungselement ist ausgebildet, das abzuführende flüssige Medium in den Rückflusseingang des Rückflussverhinderungsventils einströmen zu lassen. Vorzugsweise ist das Sicherungselement jedoch weiterhin derart ausgebildet, dass Fremdkörper, Feststoffe oder dergleichen, insbesondere einer bestimmten Größe, das Sicherungselement nicht passieren können und somit durch das Sicherungselement am Einströmen in das Rückflussverhinderungsventil gehindert werden. Dies ist vorteilhaft, da mit dem flüssigen Medium in das Rückflussverhinderungsventil einströmende Fremdkörper oder Feststoffe zwischen den Seitenwänden der sich verjüngenden Flachtülle steckenbleiben können und auf diese Weise - neben einem Verstopfen der Ventilanordnung - bewirken können, dass das Rückflussverhinderungsventil nicht korrekt schließt und es dadurch ebenfalls zu einer erhöhten Geruchsbelastung durch rückströmende Luft kommen kann. Das Eindringen von Fremdkörpern oder Feststoffen in die Ventilanordnung wird durch das Sicherungselement somit verhindert, wodurch die Geruchsbelastung der Ventilanordnung weiter reduziert wird.

Weiterhin vorzugsweise ist das Sicherungselement als Anschlag für die Seitenwände im Falle eines druckstoßbedingten Umkrempelns der Seitenwände der Flachtülle vom Rückflussausgang zum Rückflusseingang hin ausgebildet. Mit dieser Fortbildungsform kann verhindert werden, dass beim Auftreten eines Druckstoßes, beispielsweise bei kurzzeitig auftretenden Druckdifferenzen zwischen einem Hochgeschwindigkeitszugwagon und der Umgebung, die Seitenwände der Flachtülle vom Rückflussausgang her so weit umgestülpt werden, dass das Rückflussverhinderungsventil dauerhaft umgekrempelt ist. Durch das Vorsehen des Sicherungselements können die Seitenwände nur bis zu dem Sicherungselement umgestülpt werden, da dieses vorzugsweise ein Anschlag bildet für die Seitenwände. Das Sicherungselement sorgt somit dafür, dass die Seitenwände nach einem druckstoßbedingten Umkrempeln und Anschlagen an das Sicherungselement aufgrund ihrer Elastizität und weiterhin vorzugsweise aufgrund ihrer Vorspannung wieder in die Ausgangslage zurückkehren. Dies ist vorteilhaft, da ein druckstoßbedingtes dauerhaftes Umkrempeln der Seitenwände andernfalls dazu führen kann, dass das Rückflussverhinderungsventil seine Eigenschaft zur Verhinderung des Rückflusses von flüssigem Medium vom Rückflussausgang zum Rückflusseingang hin verhindern kann, verliert und weiterhin die Geruchsbelastung bei einem umgekrempelten Rückflussverhinderungsventil deutlich zunimmt. Ein weiterer Nachteil ist, dass das Rückflussverhinderungsventil in einer umgekrempelten Position den gewünschten Durchfluss von abzuführendem Medium in der Richtung von der Einlassöffnung zur Auslassöffnung blockieren kann, so dass sich in nachteiliger Weise abzuführendes Medium oberhalb des Rückflussverhinderungsventils ansammeln kann. Das Sicherungselement dient daher in bevorzugter Weise dazu, dass druckstoßbedingt umgekrempelte Seitenwände wieder in ihre Ausgangslage zurückkehren und die mit dem Umkrempeln verbundenen Nachteile damit reduziert werden.

Die Erfindung kann dadurch fortgebildet werden, dass das Sicherungselement als im Wesentlichen scheibenförmiges Sieb ausgebildet und vorzugsweise mit dem Rückflusseingang oder der Einlassöffnung fest verbunden ist.

In konstruktiv besonders einfacher und bevorzugter Weise kann das Sicherungselement als Sieb ausgebildet sein, das in seinem Querschnitt an den Querschnitt des Rückflusseingangs und/oder die Einlassöffnung angepasst ist und vorzugsweise scheibenförmig oder in Form eines Kugeloberflächenabschnitts ausgebildet ist. Es ist weiterhin bevorzugt, dass das Sicherungselement mit dem Rückflusseingang oder der Einlassöffnung fest verbunden ist, so dass ein ungewolltes Lösen des Sicherungselementes vom Rückflusseingang oder der Einlassöffnung verhindert wird. Weiterhin wird es durch die feste Verbindung ermöglicht, dass das Sicherungselement als Teil einer kompakten Ventilanordnung leicht und schnell ausgetauscht werden kann.

Die Erfindung wird vorzugsweise fortgebildet durch eine Spülvorrichtung zur Abgabe eines abzuführenden flüssigen Mediums.

Die Spülvorrichtung ist vorzugsweise in Einbaulage in Schwerkraftrichtung im Wesentlichen oberhalb des Rückflussverhinderungsventils angeordnet und ausgebildet, ein abzuführendes flüssiges Medium abzugeben, vorzugsweise Spülwasser, das beispielsweise dazu dient, weiteres abzuführendes flüssiges Medium, beispielsweise Urin in einem Urinal, zu verdünnen und die Ventilanordnung zu spülen. Die Abgabe des abzuführenden flüssigen Mediums durch die Spülvorrichtung ist vorzugsweise durch eine Steuerungsvorrichtung steuerbar, die ausgebildet ist, die Spülvorrichtung zur Abgabe eines Medium freizugeben oder zu sperren. Vorzugsweise erfolgt dies durch ein in der Spülvorrichtung angeordnetes Ventil, das die Abgabe von flüssigem Medium durch die Spülvorrichtung freigeben oder sperren kann. Dieses Ventil der Spülvorrichtung ist vorzugsweise ansteuerbar durch die Steuerungsvorrichtung der Spülvorrichtung. Die Steuerungsvorrichtung zur Steuerung der Spülvorrichtung ist vorzugsweise mit der Steuerungsvorrichtung zur Steuerung des Durchflussverhinderungsventils identisch oder mit dieser gekoppelt ist. Vorzugsweise erfolgt eine zentrale, gemeinsame elektronische Steuerung von Spülvorrichtung und Durchflussverhinderungsventil. Die Steuerung erfolgt vorzugsweise über eine Software. Weiterhin vorzugsweise erfolgt die Steuerung durch Vorgabe von aufeinander abgestimmten Zeitintervallen, in denen das Durchflussverhinderungsventil geöffnet bzw. geschlossen ist und in denen die Spülvorrichtung Medium abgibt bzw. nicht abgibt. Das Zeitintervall, in dem die Spülvorrichtung noch Medium abgibt, wenn das Durchflussverhinderungsventil bereits geschlossen ist, ist vorzugsweise in Abhängigkeit vom Durchflussvolumen bzw. -druck so bemessen, dass eine dem Restanteil entsprechende Menge Medium abgegeben wird.

Weiterhin vorzugsweise ist die Steuerungsvorrichtung derart ausgebildet, dass das Durchflussverhinderungsventil standardmäßig geschlossen ist und sich der Restanteil des abzuführenden Mediums oberhalb des Durchflussverhinderungsventils befindet. Das Durchflussverhinderungsventil wird vorzugsweise nur geöffnet, wenn (weiteres) abzuführendes Medium anfällt. Auf diese Weise wird die Geruchsbelastung weiter reduziert.

Die Erfindung wird weiterhin vorzugsweise dadurch fortgebildet, dass die Spülvorrichtung ausgebildet ist, nach dem Sperren des Durchflussverhinderungsventils eine dem Restanteil entsprechende Menge Medium abzugeben.

Die Spülvorrichtung oder eine Steuerungsvorrichtung zur Steuerung der Abgabe von flüssigem Medium durch die Spülvorrichtung ist gemäß dieser Fortbildungsform derart ausgebildet, dass durch die Spülvorrichtung auch nach dem Sperren des Durchflussverhinderungsventils weiterhin flüssiges Medium abgegeben wird, wobei die Menge des nach dem Sperren des Durchflussverhinderungsventils von der Spülvorrichtung abgegebenen Mediums dem eine Sperrschicht bildenden Restanteil entspricht. Auf diese Weise wird sichergestellt, dass nach dem Schließen des Durchflussverhinderungsventils genug flüssiges Medium nachläuft, das das Durchflussverhinderungsventil nicht mehr passieren kann, sondern sich oberhalb des geschlossenen Durchflussverhinderungsventils sammelt und die Sperrschicht bildet, die dafür sorgt, dass der Rückflussausgang des Rückflussverhinderungsventils in die Sperrschicht eintaucht und so die Geruchsbelastung reduziert.

Die Erfindung kann vorzugsweise dadurch fortgebildet werden, dass die Spülvorrichtung ausgebildet ist, für ein Sperrzeitintervall nach dem Sperren des Durchflussverhinderungsventils flüssiges Medium abzugeben, wobei das Sperrzeitintervall vorzugsweise derart bemessen ist, dass die im Sperrzeitintervall abgegebene Menge Medium dem Restanteil entspricht.

Alternativ oder zusätzlich kann die Spülvorrichtung oder die die Abgabe des flüssigen Mediums durch die Spülvorrichtung steuernde Steuerungsvorrichtung auch derart ausgebildet sein, dass nach dem Sperren des Durchflussverhinderungsventils während eines Sperrzeitintervalls weiterhin flüssiges Medium von der Spülvorrichtung abgegeben wird. Dabei ist es bevorzugt, dass das Sperrzeitintervall einem Zeitraum entspricht, in dem von der Spülvorrichtung so viel flüssiges Medium abgegeben wird, wie dem Restanteil entspricht.

Die Spülvorrichtung oder die Steuerungsvorrichtung für die Spülvorrichtung ist demnach derart ausgebildet, dass die Abgabe von flüssigem Medium durch die Spülvorrichtung nach dem Sperren des Durchflussverhinderungsventils derart gesteuert ist, dass sichergestellt ist, dass die sich oberhalb des gesperrten Durchflussverhinderungsventils bildende Sperrschicht dem Restanteil entspricht, so dass weiterhin sichergestellt ist, dass der Rückflussausgang des Rückflussverhinderungsventils in die Sperrschicht eintaucht, um die Reduzierung der Geruchsbelastung zu gewährleisten.

Weiterhin vorzugsweise ist die Spülvorrichtung oder die Steuerungsvorrichtung für die Spülvorrichtung ausgebildet, ein Signal zu empfangen, das angibt, dass das Durchflussverhinderungsventil gesperrt ist, und in Abhängigkeit von diesem Signal die Menge des nach dem Sperren des Durchflussverhinderungsventils abzugebende Menge Medium zu steuern.

Die Erfindung wird vorzugsweise weiterhin fortgebildet durch einen Mediumabgabesensor, der ausgebildet ist, zu detektieren, dass nach dem Sperren des Durchflussverhinderungsventils eine dem Restanteil des abzuführenden Mediums entsprechende Menge Medium von der Spülvorrichtung abgegeben wurde.

Der Mediumabgabesensor kann beispielsweise ein Durchflusssensor sein, der in oder an der Spülvorrichtung angeordnet ist und den Durchfluss des flüssigen Mediums durch die Spülvorrichtung oder eine an die Spülvorrichtung anschließende Leitung detektiert.

Diese Fortbildungsform hat den Vorteil, dass die Menge des von der Spülvorrichtung abgegebenen flüssigen Mediums detektiert wird, so dass bei Erreichen einer den Restanteil entsprechenden Menge nach dem Sperren des Durchflussverhinderungsventils die weitere Abgabe flüssigen Mediums durch die Spülvorrichtung verhindert werden kann.

Die Erfindung wird vorzugsweise weiterhin fortgebildet durch einen Restanteilsensor, der ausgebildet ist, zu detektieren, dass eine dem Restanteil des abzuführenden Mediums entsprechende Menge Medium oberhalb des gesperrten Durchflussverhinderungsventils angesammelt ist.

Alternativ oder zusätzlich zum Mediumabgabesensor ist in dieser Fortbildungsform ein Restanteilsensorvorgesehen, der detektiert, dass die Sperrschicht ein bestimmtes, dem Restanteil entsprechendes Volumen erreicht hat. Dieser Restanteilsensorkann beispielsweise als Flüssigkeitssensor oberhalb des Durchflussverhinderungsventils und vorzugsweise auch knapp oberhalb des Rückflussausgangs des Rückflussverhinderungsventils angeordnet sein. Auf diese Weise kann der Restanteilsensordetektieren, dass durch die Sperrschicht ein Flüssigkeitsstand oberhalb des gesperrten Durchflussverhinderungsventils erreicht ist, der höher liegt als der Rückflussausgang des Rückflussverhinderungsventils.

Weiterhin vorzugsweise ist der Restanteilsensor bzw. sind die Mediumabgabe- und Restanteilsensoren ausgebildet, ein Signal zu erzeugen, wenn eine dem Restanteil entsprechende Menge Medium abgegeben wurde bzw. eine solche Menge Medium oberhalb des gesperrten Durchflussverhinderungsventils angesammelt ist. Weiterhin vorzugsweise ist bzw. sind die Steuerungsvorrichtung/en ausgebildet, ein entsprechendes Signal des Restanteilsensors und/oder des Mediumabgabesensors zu empfangen und in Abhängigkeit dieses Signals die Abgabe von flüssigem Medium durch die Spülvorrichtung zu steuern.

Die Erfindung wird vorzugsweise weiterhin fortgebildet durch einen Überlaufsensor, der ausgebildet ist, zu detektieren, dass oberhalb des Rückflussverhinderungsventils Medium angesammelt ist, und weiterhin vorzugsweise ausgebildet ist, in diesem Fall ein Signal zu generieren. Vorzugsweise ist die Steuerungsvorrichtung ausgebildet, das Durchflussverhinderungsventil zu öffnen, wenn sich Medium oberhalb des Rückflussverhinderungsventils angesammelt hat. Die Steuerungsvorrichtung ist dabei vorzugsweise ausgebildet, ein entsprechendes Signal des Überlaufsensors zu empfangen.

Medium sammelt sich insbesondere dann oberhalb des Rückflussverhinderungsventils an, wenn (weiteres) abzuführendes Medium anfällt, das Durchflussverhinderungsventil aber noch geschlossen ist. Die bevorzugte Fortbildungsform ermöglicht es in vorteilhafter Weise, dass das Durchflussverhinderungsventil dann öffnet, wenn sich so viel abzuführendes Medium oberhalb des geschlossenen Durchflussverhinderungsventils angesammelt hat, dass das Medium sich auch über dem Rücklaufverhinderungsventil ansammelt und der Überlaufsensor dies detektiert. Auf diese Weise kann das abzuführende Medium das dann geöffnete Durchflussverhinderungsventil passieren. Weiterhin kann so sichergestellt werden, dass das Durchflussverhinderungsventil nur dann öffnet, wenn abzuführendes Medium anfällt und ansonsten geschlossen bleibt, um die Geruchsbelastung zu reduzieren.

Weiterhin vorzugsweise ist der Überlaufsensor in Einbaulage im Wesentlichen oberhalb des Rückflussverhinderungsventils angeordnet. Besonders bevorzugt ist es, wenn der Überlaufsensor in Einbaulage unterhalb eines Beckenabflusses vorgesehen ist. Auf diese Weise kann verhindert werden, dass sich in dem Becken (beispielsweise einem Waschbecken oder einem Urinal) abzuführendes Medium ansammelt.

Die Erfindung kann weiterhin dadurch fortgebildet werden, dass das Durchflussverhinderungsventil als Schlauchventil ausgebildet ist mit einem Schlauchventilgehäuse, einem Durchflusseingang, einem Durchflussausgang und einem sich zwischen dem Durchflusseingang und dem Durchflussausgang innerhalb des Schlauchventilgehäuses erstreckenden Medienleitkanal aus einem elastischen Material, wobei im Bereich des Durchflussverhinderungsventils zwischen dem Medienleitkanal und dem Schlauchventilgehäuse ein gasgefüllter Zwischenraum derart ausgebildet ist, dass der Medienleitkanal zumindest abschnittsweise zusammengepresst und damit das Durchflussverhinderungsventil geschlossen wird, wenn ein in dem gasgefüllten Zwischenraum ausgebildeter Gasdruck einen in dem Medienleitkanal herrschenden Gasdruck übersteigt und weiterhin gekennzeichnet durch eine Sperrvorrichtung, die ausgebildet ist, den in dem gasgefüllten Zwischenraum ausgebildeten Gasdruck auf einem über dem in dem Medienleitkanal herrschenden Gasdruck zu halten.

In dieser bevorzugten Fortbildungsform ist das Durchflussverhinderungsventil als Schlauchventil ausgebildet, dass pneumatisch freigegeben und gesperrt werden kann. Eine solche Ausbildung des Durchflussverhinderungsventils ist insbesondere in den eingangs genannten Anwendungsgebieten von Vorteil. Insbesondere bei der Anwendung von pneumatisch angesteuerten Schlauchventilen bei Hochgeschwindigkeitszügen kann es beim Abstellen der Züge und einem Druckabfall im Flüssigkeitsabfuhrsystem dazu kommen, dass das Schlauchventil öffnet. Es ist daher von Vorteil, eine Sperrvorrichtung vorzusehen, die das Schlauchventil auch bei ungünstigen Druckverhältnissen geschlossen hält. Auf diese Weise kann eine dauerhafte Reduzierung der Geruchsbelastung auch bei ungünstigen Druckverhältnissen oder beim Abstellen des Zuges gewährleistet werden.

In einer weiteren Fortbildungsform ist die Ventilanordnung gekennzeichnet durch eine Entlüftungsvorrichtung zum Entlüften der Ventilanordnung, insbesondere des Rückflussverhinderungsventils, wobei vorzugsweise die Entlüftungsvorrichtung eine Entlüftungsleitung mit einem ersten und einem zweiten Ende umfasst, wobei das erste Ende mit dem Rückflussverhinderungsventil, insbesondere mit einer Kammer des Rückflussverhinderungsventils, verbunden ist und wobei ferner vorzugsweise das zweite Ende der Entlüftungsleitung mit einer Abfuhrleitung eines Zwischenbehälters eines Urinals verbindbar ist.

Über die Betriebsdauer beispielsweise eines Urinals, in dem die Ventilanordnung zur Anwendung kommt, hinweg sammelt sich in die Ventilanordnung einströmendes Medium im Zwischenbehälter an. Dabei kann es vorkommen, insbesondere wenn das Medium einen bestimmten Stand im Zwischenbehälter erreicht, dass sich im Zwischenbehälter und der Ventilanordnung ein Druck, insbesondere durch die verbliebene Luft in diesen Bereichen, aufbaut. Dieser Druck entsteht beispielsweise auch in der Gehäusekammer des Rückflussverhinderungsventils und kann dazu führen, dass das Rückflussverhinderungsventil nicht mehr öffnet. Dann kann es dazu kommen, dass sich über den Rückflusseingang einströmendes Medium über dem Rückflussverhinderungsventil staut.

Durch das Vorsehen der Entlüftungseinrichtung, durch die die Ventilanordnung, insbesondere das Gehäuse des Rückflussverhinderungsventils entlüftet wird, kann ein solches ungewolltes Schließen des Rückflussverhinderungsventils vermieden werden. Auf diese Weise kann der Zwischenbehälter vollständig gefüllt werden, ohne dass es zu einem ungewollten Verschließen der Ventilanordnung, insbesondere des Rückflussverhinderungsventils, durch einen entsprechenden Druckaufbau kommt. Ohne die Entlüftungsvorrichtung kann es dazu kommen, dass der Zwischenbehälter auch nur bei teilweise Füllung geleert werden muss, um die Ventilanordnung wieder zu öffnen.

Vorzugweise wird das Gehäuse des Rückflussverhinderungsventils, insbesondere eine Kammer in diesem Gehäuse, über die Entlüftungsvorrichtung, die beispielsweise als Entlüftungsleitung aus einem Kunststoffrohr, beispielsweise aus Polyurethan, ausgebildet sein kann, entlüftet. Wenn durch den Eingang des Durchflussverhinderungsventils Medium in die erfindungsgemäße Ventilanordnung eintritt, kann es ohne Entlüftung des Rückflussverhinderungsventils dazu kommen, dass sich Medium über dem Rückflussverhinderungsventil anstaut, da das Volumen des Rückflussverhinderungsventils mit Gas und/oder flüssigem Medium gefüllt ist. Durch die Entlüftung des Gehäuses des Rückflussverhinderungsventils kann Medium, insbesondere Gas, wie Luft, aus der Gehäusekammer des Rückflussverhinderungsventils austreten. Damit kann Medium in das Rückflussverhinderungsventil einströmen ohne dass es zu einem Rückstau oberhalb des Rückflussverhinderungsventils kommt.

Vorzugsweise entlüftet die Entlüftungsvorrichtung das Gehäuse des Rückflussverhinderungsventils in die Abfuhrleitung des Zwischenbehälters. Dazu sieht die Fortbildung sieht vorzugsweise weiterhin vor, dass ein zweites Ende der Entlüftungsleitung mit einer Abfuhrleitung eines Zwischenbehälters verbindbar ist. Dies ist insbesondere dann bevorzugt, wenn die Ventilanordnung in einem Urinal eingesetzt wird, das mit einem Zwischenbehälter arbeitet, in den Druckluft zum Transport des Inhalts des Zwischenbehälters aus der Abfuhrleitung in ein Abfuhrleitungssystem eingebracht werden kann. Dies hat den Vorteil, dass außer der Entlüftungsvorrichtung keine weiteren Bauteile oder Systemausgänge für die Entlüftung in einem Urinal vorgesehen sein müssen.

Auch bei dieser Fortbildungsform ist vorgesehen, dass sich durch die Steuerungsvorrichtung eine Sperrschicht von abzuführendem Medium in Schwerkraftrichtung im Wesentlichen oberhalb des Durchflussverhinderungsventils bildet, deren Oberfläche in Schwerkraftrichtung im Wesentlichen oberhalb des Rückflussausgangs des Rückflussverhinderungsventils angeordnet ist, um einen Geruchsschutz zu realisieren.

Die Erfindung kann weiter dadurch fortgebildet werden, dass in der Entlüftungsleitung ein Rückschlagventil angeordnet ist, das ausgebildet und angeordnet ist, einen Fluidstrom vom ersten zum zweiten Ende der Entlüftungsleitung zu ermöglichen und einen Fluidstrom vom zweiten zum ersten Ende der Entlüftungsleitung zu sperren, wobei vorzugsweise das Rückschlagventil in Einbaulage im Wesentlichen senkrecht angeordnet ist und/oder in Einbaulage derart angeordnet ist, dass ein zweiter Abschnitt der Entlüftungsleitung zwischen dem zweiten Ende und dem Rückschlagventil länger ist als ein erster Abschnitt der Entlüftungsleitung zwischen dem ersten Ende und dem Rückschlagventil.

In dieser Fortbildungsform wird durch ein Rückschlagventil in der Entlüftungsleitung sichergestellt, dass ein fluides Medium, insbesondere Gas, wie Luft, nur aus dem Rückflussverhinderungsventil hinaus, nicht jedoch in dieses hinein gelangen kann.

Das Rückschlagventil der Entlüftungsvorrichtung soll insbesondere auch verhindern, dass beim Entleeren des Zwischenbehälters mittels über einen Druckmittelanschluss eingeleiteter Druckluft ein Medienstrom, insbesondere Druckluft und/oder mit Druck beaufschlagte Flüssigkeit, über die Abfuhrleitung und den Anschlussstutzen in das zweite Ende der Entlüftungsleitung eindringt und über das erste Ende der Entlüftungsleitung in die Ventilanordnung, insbesondere in das Rückflussverhinderungsventil, eindringen kann.

Dabei ist eine Einbaulage des Rückschlagventils bevorzugt, die einerseits im Betriebszustand im Wesentlichen senkrecht ist. Ferner ist bevorzugt, dass das Rückschlagventil im Einbauzustand näher am ersten Ende der Entlüftungsleitung angeordnet ist als an deren zweitem Ende. Es ist besonders bevorzugt, dass ein zweiter Abschnitt der Entlüftungsleitung zwischen dem zweiten Ende der Entlüftungsleitung im Rückschlagventil länger ist als ein erster Abschnitt der Entlüftungsleitung zwischen dem ersten Ende der Entlüftungsleitung und dem Rückschlagventil, insbesondere dass der zweite Abschnitt mehr als doppelt so lang ist wie der erste Abschnitt. Durch Ausbildung des ersten Abschnitts der Entlüftungsleitung als möglichst kurzer Abschnitt kann in vorteilhafter Weise sichergestellt werden, dass aus diesem ersten Abschnitt möglichst wenig Medium in das Rückflussverhinderungsventil zurückströmen kann.

Die Fortbildung der Entlüftungsvorrichtung mit einem Rückschlagventil ist insbesondere auch im Anwendungsgebiet mobiler sanitärer Einrichtungen, beispielsweise in Zügen bevorzugt, um auch bei Druckschwankungen eine zuverlässige Entlüftung des Rückflussverhinderungsventils zu gewährleisten.

Eine alternative, nicht von Anspruch 1 umfasste Ventilanordnung zur Abfuhr eines flüssigen Mediums umfasst eine Einlassöffnung, eine Auslassöffnung und ein in Einbaulage zwischen der Einlass- und der Auslassöffnung angeordnetes Rückflussverhinderungsventil mit einem Rückflusseingang, einem Rückflussausgang, einer vom Rückflusseingang zum Rückflussausgang weisenden und sich in dieser Richtung verjüngenden Flachtülle mit zwei Seitenwänden aus einem elastischen Material, gekennzeichnet durch ein am Rückflusseingang des Rückflussverhinderungsventils oder an der Einlassöffnung angeordnetes, fluiddurchlässiges Sicherungselement.

Gemäß dieser alternativen Ventilanordnung wird die Geruchsbelastung bei einer Ventilanordnung mit einem Rückflussverhinderungsventil mit einer sich verjüngenden Flachtülle mit zwei Seitenwänden, vorzugsweise einem Duckbill-Ventil, dadurch reduziert, dass am Rückflusseingang des Rückflussverhinderungsventils oder an der Einlassöffnung (wobei Rückflusseingang des Rückflussverhinderungsventils und Einlassöffnung auch miteinander identisch sein können), ein Sicherungselement angeordnet ist, dass das flüssige Medium passieren lässt, Fremdkörper oder Feststoffe hingegen am Eindringen in das Rückflussverhinderungsventil hindert. Wie bereits oben mit Bezug auf eine Fortbildungsform des ersten Aspekts beschrieben, ist es von Vorteil, wenn verhindert werden kann, dass Fremdkörper oder Feststoffe in das Rückflussverhinderungsventil eindringen und dort zwischen den Seitenwänden der sich verjüngenden Flachtülle eingeklemmt werden können. Dies kann bei Rückflussverhinderungsventilen mit sich verjüngenden Flachtüllen, insbesondere bei Duckbill-Ventilen dazu führen, dass die Vorspannung der Seitenwände zumindest teilweise durch den dazwischen eingeklemmten Fremdkörper überwunden wird, so dass die Seitenwände zumindest im Bereich des eingeklemmten Fremdkörpers nicht vollständig schließen, und eine verstärkte Geruchsbelastung durch rückströmende Luft entstehen kann. Bei Ventilanordnungen, bei denen die Ausbildung einer Sperrschicht oberhalb eines gesperrten Durchflussverhinderungsventils nicht erwünscht oder nicht möglich ist (beispielsweise bei Ventilanordnungen ohne ein Durchflussverhinderungsventil) kann bereits durch die Anordnung des Sicherungselements am Rückflusseingang des Rückflussverhinderungsventils oder der Einlassöffnung sichergestellt werden, dass die Geruchsbelastung deutlich reduziert werden kann.

Weiterhin gelten die oben mit Bezug auf eine Fortbildungsform des ersten Aspekts genannten weiteren Vorteile, beispielsweise hinsichtlich des druckstoßbedingten Umkrempelns des Rückflussventils, auch für diese alternative Ventilanordnung.

Diese alternative Ventilanordnung wird vorzugsweise fortgebildet durch ein ansteuerbares, in Einbaulage zwischen der Einlass- und der Auslassöffnung und in Schwerkraftrichtung im Wesentlichen unterhalb des Rückflussverhinderungsventil angeordnetes Durchflussverhinderungsventil, und eine Steuerungsvorrichtung, die ausgebildet ist, das Durchflussverhinderungsventil für den Durchfluss des flüssigen Mediums freizugeben oder zu sperren, wobei die Steuerungsvorrichtung ausgebildet ist, das Durchflussverhinderungsventil derart zu sperren, dass ein Restanteil des abzuführenden Mediums in Schwerkraftrichtung im Wesentlichen oberhalb des Durchflussverhinderungsventils eine Sperrschicht bildet, deren Oberfläche in Schwerkraftrichtung im Wesentlichen oberhalb des Rückflussausgangs des Rückflussverhinderungsventils angeordnet ist.

Wie bereits oben beschrieben, ist insbesondere eine Kombination eines ansteuerbaren Durchflussverhinderungsventils und einer entsprechenden Steuerung, die die Ausbildung einer Sperrschicht oberhalb des Durchflussverhinderungsventils bewirkt, mit einem Sicherungselement am Ruckflusseingang des Rückflussverhinderungsventils oder an der Einlassöffnung besonders bevorzugt.

Ein weiterer Aspekt der Erfindung ist ein Verfahren zur Steuerung einer Ventilanordnung, umfassend die Schritte: Freigeben eines Durchflussverhinderungsventils zur Abfuhr eines flüssigen Mediums, und Sperren des Durchflussverhinderungsventils, dadurch gekennzeichnet, dass das Durchflussverhinderungsventil derart gesperrt wird, dass ein Restanteil des abzuführenden Mediums in Schwerkraftrichtung im Wesentlichen oberhalb des Durchflussverhinderungsventils eine Sperrschicht bildet, deren Oberfläche in Schwerkraftrichtung im Wesentlichen oberhalb eines Rückflussausgangs eines Rückflussverhinderungsventils angeordnet ist.

Dieses erfindungsgemäße Verfahren kann fortgebildet werden nach den Ansprüchen 11 und 12.

Das erfindungsgemäße Verfahren und seine Fortbildungen weisen Merkmale bzw. Verfahrensschritte auf, die sie insbesondere dafür geeignet machen, für eine erfindungsgemäße Ventilanordnung und ihre Fortbildungen verwendet zu werden. Zu den Vorteilen, Ausführungsvarianten und Ausführungsdetails dieses Verfahrens und seiner Fortbildunggen wird daher auf die vorangegangene Beschreibung zu den entsprechenden Merkmalen der erfindungsgemäßen Ventilanordnungen und ihrer Fortbildungen verwiesen.

Eine bevorzugte Ausführungsform der Erfindung wird beispielhaft anhand der beiliegenden Figuren beschrieben. Es zeigen:
- Figur 1:: eine Ausführungsform einer erfindungsgemäßen Ventilanordnung im Einbauzustand in einem Urinal,
- Figur 2:: die Ventilanordnung gemäß Figur 1 im Detail,
- Figur 3:: einen Pneumatikplan mit Ansteuerung der Ventilanordnung gemäß der Figuren 1 und 2 und
- Figur 4:: eine weitere Ausführungsform einer erfindungsgemäßen Ventilanordnung mit Entlüftungsvorrichtung.

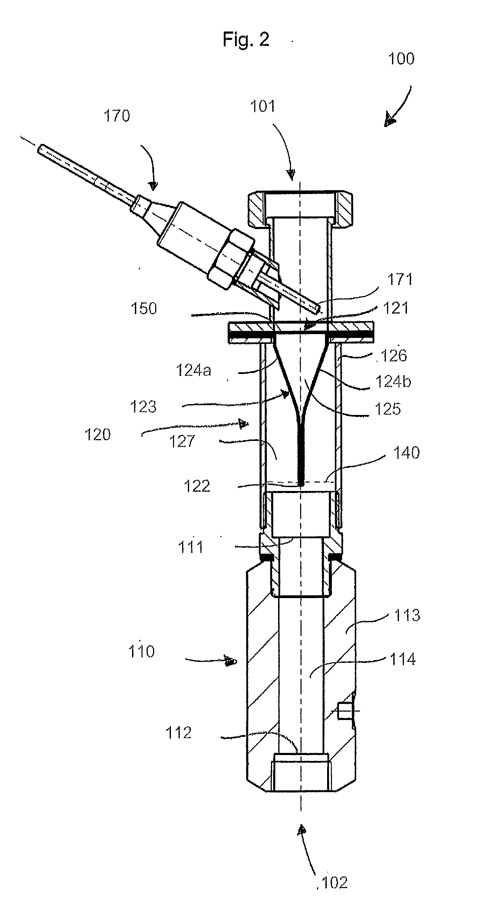

Die Ausführungsform der erfindungsgemäßen Ventilanordnung 100 gemäß Figur 2 weist eine Einlassöffnung 101, eine Auslassöffnung 102 und ein dazwischen angeordnetes, ansteuerbares Durchflussverhinderungsventil 110 auf. In Schwerkraftrichtung oberhalb des Durchflussverhinderungsventils 110 ist ein Rückflussverhinderungsventil 120 angeordnet.

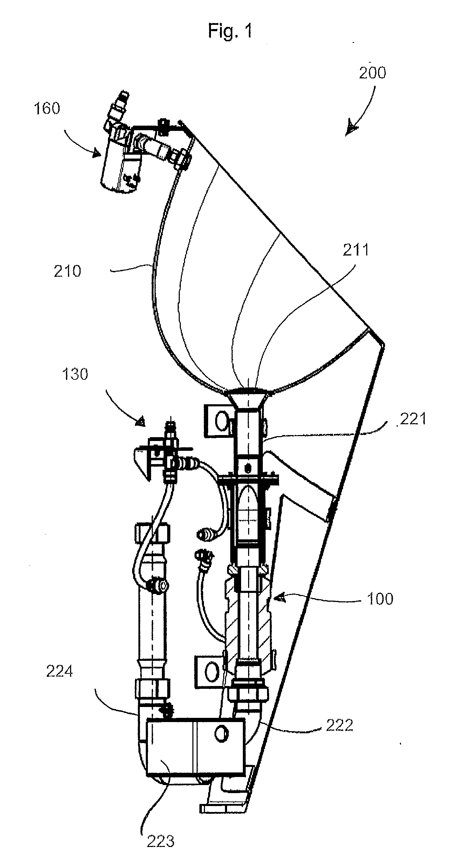

Das Rückflussverhinderungsventil 120 ist als Duckbill-Ventil mit einem Rückflussverhinderungsventilgehäuse 126 ausgebildet und weist einen Rückflusseingang 121, einen Rückflussausgang 122 und eine sich vom Rückflusseingang 121 zum Rückflussausgang 122 verjüngende Flachtülle 123 mit zwei Seitenwänden 124 a, b aus einem elastischen Material auf. Die Flachtülle 123 weist in ihrem Inneren einen Kanal 125 auf. Die Seitenwände 124 a, b sind derart vorgespant, dass sie in einer ersten Stellung, die hier in den Figuren 1 und 2 dargestellt ist, zumindest abschnittsweise gegeneinander gepresst sind und somit der Kanal 125 des Rückflussverhinderungsventils zumindest abschnittsweise verschlossen ist, wenn kein Medium durch den Rückflusseingang 121 in das Duckbill-Ventil fließt oder wenn Medium vom Rückflussausgang 122 her auf das Duckbill-Ventil trifft. In einer zweiten Stellung (nicht dargestellt) sind die beiden Seitenwände 124 a, b zumindest abschnittsweise voneinander gelöst, so dass der Kanal 125 des Rückflussverhinderungsventils zumindest teilweise freigegeben ist, wenn Medium durch den Rückflusseingang 122 in das Duckbill-Ventil fließt.

Das Durchflussverhinderungsventil 110 ist als Schlauchventil ausgebildet mit einem Durchflusseingang 111, einem Durchflussausgang 112 und einem Schlauchventilgehäuse 113. Zwischen dem Durchflusseingang 111 und dem Durchflussausgang 112 erstreckt sich innerhalb des Schlauchventilgehäuses 113 ein Medienleitkanal 114 aus einem elastischen Material. Zwischen dem Medienleitkanal 114 und dem Schlauchventilgehäuse 113 ist ein gasgefüllter Zwischenraum (nicht dargestellt) derart ausgebildet, dass der Medienleitkanal 114 zumindest abschnittsweise zusammengepresst und damit das Durchflussverhinderungsventil 110 geschlossen wird, wenn ein in den gasgefüllten Zwischenraum ausgebildeter Gasdruck einen in dem Medienleitkanal 114 herrschenden Gasdruck übersteigt. Das derart pneumatisch angesteuerte Schlauchventil 110 ist vorzugsweise mit einer Sperrvorrichtung (in Fig. 1 und 2 nicht dargestellt) gekoppelt, die ausgebildet ist, den in dem gasgefüllten Zwischenraum ausgebildeten Gasdruck auf einem über dem in dem Medienleitkanal 114 herrschenden Gasdruck zu halten, um das Schlauchventil in Situationen mit ungünstigen Druckverhältnissen, beispielsweise beim Abstellen eines Hochgeschwindigkeitszuges, geschlossen halten zu können.

Die Ventilanordnung 100 weist eine Steuerungsvorrichtung 130 auf, die ausgebildet ist, das Durchflussverhinderungsventil 110 derart zu sperren, dass ein Restanteil des abzuführendes Mediums in Schwerkraftrichtung im Wesentlichen oberhalb des Durchflussverhinderungsventils 110 eine Sperrschicht bildet, deren Oberfläche in Schwerkraftrichtung im Wesentlichen oberhalb des Rückflussausgangs 122 des Rückflussverhinderungsventils 120 angeordnet ist. Die Lage dieser Oberfläche ist in Figur 1 mit der gestrichelten Linie 140 angedeutet. Im Falle eines gesperrten Durchflussverhinderungsventils 110 sammelt sich der Restanteil des abzuführenden Mediums im Bereich oberhalb des Durchflussverhinderungsventils 110 bis zu einer durch die gestrichelte Linie 140 dargestellten Höhe an, so dass der Rückflussausgang 122 des Rückflussverhinderungsventils 120 in die durch den Restanteil gebildete Sperrschicht eintaucht. Auf diese Weise kann Luft, die sich beispielsweise im Bereich 127 der Ventilanordnung 100 befindet, nicht durch den Rückflussausgang 122 in das Rückflussverhinderungsventil 120 eindringen und das Rückflussverhinderungsventil 120 vom Rückflussausgang 122 her zum Rückflusseingang 121 durchströmen. Auf diese Weise kann die Geruchsbelastung deutlich reduziert werden. Dies ist insbesondere bei der Ausbildung des Durchflussverhinderungsventils 120 als Duckbill-Ventil von Vorteil, da die Seitenwände 124 a, b der Flachtülle 123, insbesondere bei Rückflussverhinderungsventilen mit langer Einsatzdauer, nicht oder nicht mehr vollständig schließen, so dass eine Luftströmung vom Rückflussausgang 122 zum Rückflusseingang 121 durch das Rückflussverhinderungsventil 120 möglich ist und zu Geruchsbelastungen führen kann. Diese Luftrückströmung wird durch die Ausbildung einer Sperrschicht, in die der Rückflussausgang 122 eintaucht, verhindert.

Beim Einbau einer erfindungsgemäßen Ventilanordnung 100 in ein Urinal 200 ergibt sich die beispielhaft in Figur 1 gezeigte Situation. Die Ventilanordnung 100 ist unterhalb eines Urinalbeckens 210 angeordnet. Am oberen Ende des Urinalbeckens 210 befindet sich eine Spülvorrichtung 160 zur Abgabe eines flüssigen Mediums, vorzugsweise Spülwasser. Im unteren Bereich des Urinalbeckens 210 ist ein Abfluss 211 vorgesehen, der vorzugsweise mit einem Sieb verschlossen ist, dass an seinen Rändern mit dem Urinalbecken fest verbunden ist. An den Urinalbeckenabfluss 211 schließt sich eine Abflussleitung 221, 222 an, in die die Ventilanordnung 100 eingebunden ist. Anschließend ist ein Zwischenbehälter 223 vorgesehen, der wiederum über Leitungen 224 an ein Abfuhrleitungssystem (nicht dargestellt), angeschlossen ist.

Oberhalb des Rückflussverhinderungsventils 120 ist ein Überlaufsensor 170 angeordnet, der ausgebildet ist, zu detektieren, dass oberhalb des Rückflussverhinderungsventils 120 Medium angesammelt ist. Der Überlaufsensor 170 ist vorzugsweise ausgebildet, ein Signal zu erzeugen, wenn oberhalb des Rückflussverhinderungsventils 120 Medium angesammelt ist. Die Steuerungsvorrichtung 130 ist vorzugsweise ausgebildet, dieses Signal zu empfangen und in Abhängigkeit von diesem Signal das Durchflussverhinderungsventil 110 zu öffnen. Auf diese Weise wird sichergestellt, dass einerseits das Durchflussverhinderungsventil 110 standardmäßig geschlossen ist, um die Geruchsbelastung weiter zu reduzieren und andererseits anfallendes Medium durch Öffnen des Durchflussverhinderungsventils 110 abgeführt wird, bevor sich im Urinalbecken 210 in unerwünschter Weise abzuführendes Medium ansammelt.

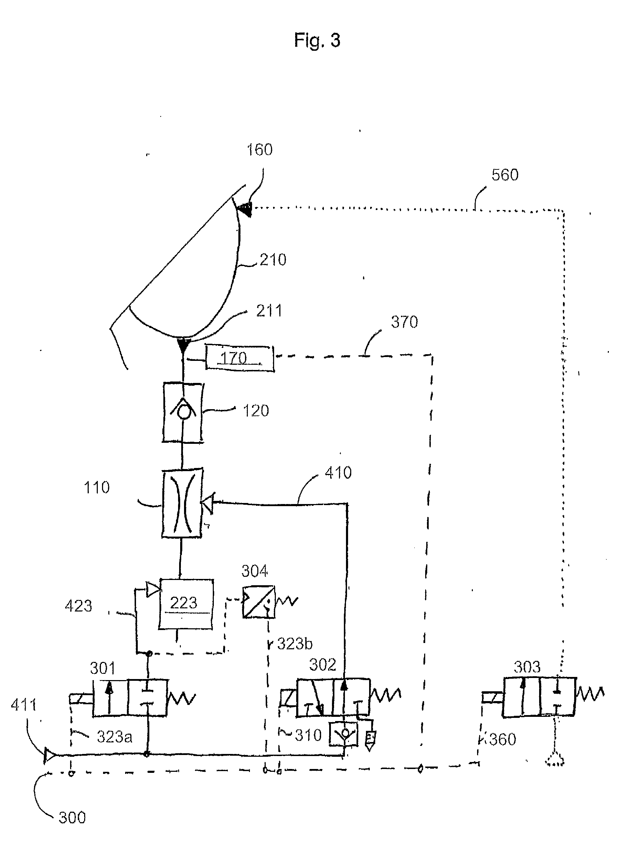

In Figur 3 ist ein Pneumatikplan mit Ansteuerung der Ventilanordnung 100 in einem Urinal 200, wie in den Figuren 1 und 2 dargestellt, abgebildet. Eine zentrale Steuerleitung 300 verbindet die Steuereinheit 130 (in Fig. 3 nicht dargestellt) über die Steuerleitungen 310, 323a, 323b, 360 und 370 mit den Ventilen 301 bis 304 und dem Überlaufsensor 170. Die Ventile 301 und 303 sind elektrisch betätigte 2/2-Wegeventile, das Ventil 302 ist als elektrisch betätigtes 3/2-Wegeventil ausgebildet, 304 ist ein Druckschalter.

Standardmäßig ist das Durchflussverhinderungsventil 110 durch das Ventil 302 und über die Druckluftleitung 410 sowie den Druckluftanschluss 411 druckbeaufschlagt und somit geschlossen. Das Ventil 302 ist weiterhin in vorteilhafter Weise als Sperrvorrichtung ausgebildet, um den in dem gasgefüllten Zwischenraum ausgebildeten Gasdruck auf einem über dem in dem Medienleitkanal 114 herrschenden Gasdruck zu halten und so ein ungewolltes Öffnen des Durchflussverhinderungsventil 110 bei ungünstigen Druckverhältnissen (beispielsweise beim Abstellen eines Hochgeschwindigkeitszuges) zur verhindern Die Wasserleitung 560 der Spülvorrichtung 160 ist standardmäßig durch das Ventil 303 geschlossen.

Wenn das Urinal benutzt wird und der Überlaufsensor 170 detektiert, dass oberhalb des Rückflussverhinderungsventils 120 abzuführendes Medium angesammelt ist, generiert der Überlaufsensor 170 ein Signal, das über die Steuerleitung 370 an die Steuervorrichtung 130 übertragen wird. Die Steuervorrichtung 130 schaltet dann das Ventil 302, so dass das Durchflussverhinderungsventil 110 öffnet und das abzuführende Medium abfließen kann. Wenn das Ventil 303 schaltet, wird die Wasserleitung 560 geöffnet und die Spülvorrichtung 160 gibt Spülwasser ab. Die Steuerungsvorrichtung 130 ist dabei vorzugsweise derart ausgebildet, dass sie das Durchflussverhinderungsventil 110 durch Schalten des Ventils 302 wieder sperrt und für ein Sperrzeitintervall nach dem Sperren des Durchflussverhinderungsventils 110 noch Spülwasser durch die Spülvorrichtung abgeben (d.h. das Ventil 303 geöffnet) lässt, wobei das Sperrzeitintervall vorzugsweise derart bemessen ist, dass die im Sperrzeitintervall abgegebene Menge Spülwasser dem Restanteil entspricht. Die Steuerung erfolgt somit durch Vorgabe von aufeinander abgestimmten Zeitintervallen, in denen das Durchflussverhinderungsventil 110 geöffnet bzw. geschlossen ist und in denen die Spülvorrichtung 160 Spülwasser abgibt bzw. nicht abgibt. Das Zeitintervall, in dem die Spülvorrichtung 160 noch Spülwasser abgibt, wenn das Durchflussverhinderungsventil 110 bereits geschlossen ist, ist dabei in Abhängigkeit vom Durchflussvolumen bzw. -druck so bemessen, dass eine dem Restanteil entsprechende Menge Spülwasser abgegeben wird.

Der Zwischenbehälter 223 ist über das Ventil 301, die Druckluftleitung 423 und den Druckluftanschluss 411 druckbeaufschlagt und mit einem Druckschalter 304 versehen. Das abzuführende Medium gelangt nach dem Passieren der Ventilanordnung 100 zunächst in den Zwischenbehälter 223 und von dort in ein Abfuhrleitungssystem (nicht dargestellt).

Eine weitere erfindungsgemäße Möglichkeit, die Geruchsbelastung zu reduzieren, ist das Vorsehen eines in Figur 2 dargestellten und als scheibenförmiges Sieb ausgebildeten Sicherungselements 150, das am Rückflusseingang 121 angeordnet ist. Dadurch kann verhindert werden, dass Fremdkörper oder Feststoffe in den Kanal 125 des Rückflussverhinderungsventils 120 eindringen und zwischen den Seitenwänden 124 a, b eingeklemmt werden, was zu Geruchsbelastung durch zwischen den Seitenwänden 124 a, b rückströmende Luft führen kann.

Ein weiterer Vorteil des Sicherungselements 150 ist die Ausbildung und Wirkung als Rückkrempelschutz. Bei Druckstößen kann es vorkommen, dass die Seitenwände 124 a, b der Flachtülle 123 des Rückflussverhinderungsventils 120 vom Rückflussausgang 122 her nach außen umstülpen. Wenn dies erfolgt, kann das Rückflussverhinderungsventil 120 zum einen seine Eigenschaft als Rückflussverhinderungsventil nicht mehr erfüllen. Zum anderen kann durch ein umgekrempeltes Rückflussverhinderungsventil 120 Luft rückströmen und somit zu einer Geruchsbelastung führen. Weiterhin kann bei einem umgekrempelten Rückflussverhinderungsventil 120 in ungewünschter Weise auch kein Medium, insbesondere auch kein Urin, mehr in Richtung der Einlassöffnung 101 zur Auslassöffnung 102 abfließen. Durch das Vorsehen des Sicherungselements 150 wird ein Anschlag für die am Rückflussausgang 122 angeordneten Enden der Seitenwände 124 a, b gebildet, so dass die Seitenwände 124 a, b bei einem druckstoßbedingten Umstülpen an das Sicherungselement 150 anschlagen und dann aufgrund ihrer Elastizität und ihrer Vorspannung wieder in die in den Figuren 1 und 2 gezeigte Ausgangslage zurückkehren. Ein dauerhafter Verbleib des Rückflussverhinderungsventils 120 in der umgekrempelten Position wird somit durch das Sicherungselement 150 verhindert. Auch auf diese Weise können somit die genannten Nachteile, insbesondere auch die Geruchsbelastung, deutlich reduziert werden.

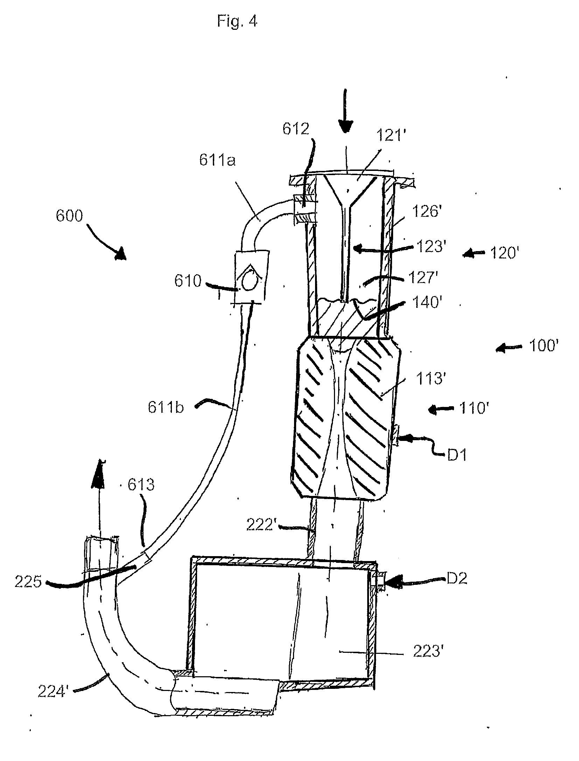

In Figur 4 ist eine weitere Ausführungsform einer erfindungsgemäßen Ventilvorrichtung 100' gezeigt mit einer Entlüftungsvorrichtung 600. Die Ventilvorrichtung 100' mit dem Rückflussverhinderungsventil 120' und dem Durchflussverhinderungsventil 110' sowie der Abflussleitung 222', dem Zwischenbehälter 223' und der Abfuhrleitung 224' entspricht im Wesentlichen den zuvor dargestellten und beschriebenen Ausführungsformen der erfindungsgemäßen Ventilanordnung 100. Die diesbezüglich zuvor ausgeführten Erläuterungen zu Aufbau und Funktionsweise der Ventilanordnung 100 gelten somit ebenso für die hier gezeigte Ventilanordnung 100' und umgekehrt. In der in Figur 4 dargestellten Ventilanordnung 100' sind mit D1 und D2 Druckmittelanschlüsse, beispielsweise für Druckluft, für das Durchflussverhinderungsventil 110` zum Schalten dieses Ventils und zur Druckbeaufschlagung des Zwischenbehälters 223' zum Abtransport des im Zwischenbehälter befindlichen Mediums vorgesehen. Diese Druckmittelanschlüsse sind in den vorhergehenden Ausführungsformen nicht dargestellt, dort vorzugsweise jedoch auch vorhanden.

Die in Figur 4 dargestellte Ventilvorrichtung 100' kann ebenso wie die vorhergehend gezeigten und beschriebenen Ausführungsformen auch ohne die Entlüftungsvorrichtung 600 eingesetzt werden. Umgekehrt können auch die vorhergehend beschriebenen und dargestellten Ausführungsformen mit der in Figur 4 dargestellten Entlüftungsvorrichtung 600 versehen werden, um die im Folgenden beschriebenen Funktionsweisen und Vorteile zu erreichen.

Die Entlüftungsvorrichtung 600 weist eine Entlüftungsleitung 611a,b auf mit einem ersten Ende 612 und einem zweiten Ende 613. Die Entlüftungsleitung 611a,b ist vorzugsweise als Kunststoffrohr, insbesondere als Polyurethanrohr ausgebildet. Die Entlüftungsvorrichtung 600 entlüftet das Gehäuse 126' des Rückflussverhinderungsventils 120' vorzugsweise in die Abfuhrleitung 224' des Zwischenbehälters 223'. Das erste Ende 612 der Entlüftungsleitung 611a,b ist mit dem Rückflussverhinderungsventil 120' und dort mit der Kammer 127' des Gehäuses 126' verbunden. Dadurch kann ein fluides Medium, insbesondere Gas, wie Luft, aus dem Inneren des Rückflussverhinderungsventils 120', insbesondere aus der Kammer 127' des Gehäuses 126', austreten, um in Pfeilrichtung durch den Rückflusseingang 121' eintretendes Medium in das Rückflussverhinderungsventil 120' gelangen zu lassen. Das zweite Ende 613 der Entlüftungsleitung 611a,b ist über einen Anschlussstutzen 225 mit der Abfuhrleitung 224' verbunden. Auf diese Weise ist kein zusätzliches Bauteil und keine zusätzliche Systemschnittstelle in einem Urinal mit einer erfindungsgemäßen Ventilanordnung erforderlich, um die Entlüftungsvorrichtung 600 anzuschließen.

Wenn über die Betriebsdauer die Ventilanordnung 100' hinweg vermehrt Medium über den Rückflusseingang 121' in die Ventilanordnung und über die Leitung 222' in den Zwischenbehälter 223' gelangt, kann es vorkommen, insbesondere wenn das Medium einen bestimmten Stand im Zwischenbehälter 223' erreicht, dass sich im Zwischenbehälter und der Rohrleitung 222' sowie in der Ventilanordnung 100' bis zum Rückflussverhinderunsventils ein Druck, insbesondere durch die verbliebene Luft in diesen Bereichen, aufbaut, der dazu führt, dass das Rückflussverhinderungsventil 120' nicht mehr öffnet und dementsprechend über den Rückflusseingang 121' einströmendes Medium sich über dem Rückflussverhinderungsventil 120' staut. Durch das Vorsehen der Entlüftungseinrichtung 600, durch die das Gehäuse 126' des Rückflussverhinderungsventils 120' entlüftet wird, kann ein solches ungewolltes Schließen des Rückflussverhinderungsventils 120' vermieden werden. Auf diese Weise kann der Zwischenbehälter 223' vollständig gefüllt werden, ohne dass es zu einem ungewollten Verschließen der Ventilanordnung 100', insbesondere des Rückflussverhinderungsventils 120', durch einen entsprechenden Druckaufbau kommt. Auf diese Weise können Entleerungen des Zwischenbehälters 223', wenn dieser zur teilweise gefüllt ist, vermieden werden.

In der Entlüftungsleitung 611a,b ist ein Rückschlagventil 610 angeordnet. Das Rückschlagventil 610 dient dazu, einen Fluidstrom, insbesondere Gas, wie Luft, vom ersten Ende 612 zum zweiten Ende 613 der Entlüftungsleitung 611a,b zu ermöglichen. Gleichzeitig ist das Rückschlagventil 610 angeordnet und ausgebildet, einen Fluidstrom von flüssigem oder gasförmigem Medium vom zweiten Ende 613 zum ersten Ende 612 der Entlüftungsleitung 611a,b zu sperren. Dadurch kann sichergestellt werden, dass die Entlüftungsvorrichtung 600 einen Fluidstrom nur weg vom Rückflussverhinderungsventil 120' erlaubt, jedoch keinen Fluidstrom hin zu diesem Ventil, der der Entlüftungswirkung entgegenwirken könnte. Das Rückschlagventil 610 der Entlüftungsvorrichtung 600 soll insbesondere auch verhindern, dass beim Entleeren des Zwischenbehälters 223' mittels über den Anschluss D2 eingeleiteter Druckluft ein Medienstrom, insbesondere Druckluft und/oder mit Druck beaufschlagte Flüssigkeit, über die Abfuhrleitung 224' und den Anschlussstutzen 225 in das zweite Ende 613 der Entlüftungsleitung 611a,b eindringt und über das erste Ende 612 der Entlüftungsleitung 611a,b in die Ventilanordnung 100', insbesondere in das Rückflussverhinderungsventil 120', gelangen kann. Dies ist insbesondere auch bei einer Anordnung der Ventilanordnung in einem mobilen Anwendungsbereich, wie beispielsweise in Zügen, von Vorteil, da auf diese Weise auch bei Druckschwankungen, beispielsweise bei Tunnelein- oder -ausfahrten, eine zuverlässige Entlüftung des Rückflussverhinderungsventils 120' gewährleistet ist.

Insbesondere ist bevorzugt, dass das Rückschlagventil 610 in Einbaulage im Wesentlichen senkrecht angeordnet ist. Ferner ist bevorzugt, dass das Rückschlagventil 610 in Einbaulage derart angeordnet ist, dass ein zweiter Abschnitt der Entlüftungsleitung 611 b zwischen dem zweiten Ende 613 und dem Rückschlagventil 610 länger ist als ein erster Abschnitt 611a zwischen dem ersten Ende 612 und dem Rückschlagventil 610. Insbesondere sollte der zweite Abschnitt 611b der Entlüftungsleitung mindestens doppelt so lang sein wie der erste Abschnitt 611a der Entlüftungsleitung. Ein möglichst kurzer erster Abschnitt 611a der Entlüftungsleitung hat den Vorteil, dass die Entlüftungswirkung möglichst zuverlässig sichergestellt werden kann.

Die Entlüftungsvorrichtung 600 trägt dazu bei, dass ein Stau von Medium oberhalb des Rückschlagverhinderungsventils über dem Rückflusseingang 121' verhindert oder zumindest verringert wird, da die Entlüftungsvorrichtung 600 einen Fluidabfluss aus der Kammer 127' des Rückflussverhinderungsventils 120' ermöglicht und so Medium vom Rückflusseingang 121' ungehindert in die Kammer 127' des Rückflussverhinderungsventils 120' einströmen kann.

Wie bei den zuvor dargestellten Ventilanordnungen kann auch in der in Figur 4 gezeigten Ausführungsform eine Sperrschicht oberhalb des Durchflussverhinderungsventils 110' gebildet werden, bis zu einer mit 140' gekennzeichneten Höhe, so dass der Rückflussausgang des Rückflussverhinderungsventils 120' in die Sperrschicht eintaucht und ein entsprechender Geruchsschutz realisiert wird.

## Patentansprüche

1. Ventilanordnung (100) zur Abfuhr eines flüssigen Mediums, umfassend
- eine Einlassöffnung (101),
- eine Auslassöffnung (102),
- ein in Einbaulage zwischen der Einlass- und der Auslassöffnung angeordnetes, ansteuerbares Durchflussverhinderungsventil (110),
- eine Steuerungsvorrichtung (130), die ausgebildet ist, das Durchflussverhinderungsventil für den Durchfluss des flüssigen Mediums freizugeben oder zu sperren,
**gekennzeichnet durch** ein in Einbaulage zwischen der Einlass- und der Auslassöffnung und in Schwerkraftrichtung im Wesentlichen oberhalb des Durchflussverhinderungsventils angeordnetes Rückflussverhinderungsventil (120) mit einem in Einbaulage in Schwerkraftrichtung im Wesentlichen nach unten weisenden Rückflussausgang (122), und weiterhin **dadurch gekennzeichnet, dass** die Steuerungsvorrichtung ausgebildet ist, das Durchflussverhinderungsventil derart zu sperren, dass ein Restanteil des abzuführenden Mediums in Schwerkraftrichtung im Wesentlichen oberhalb des Durchflussverhinderungsventils eine Sperrschicht bildet, deren Oberfläche (140) in Schwerkraftrichtung im Wesentlichen oberhalb des Rückflussausgangs des Rückflussverhinderungsventils angeordnet ist.

2. Ventilanordnung (100) nach dem vorhergehenden Anspruch,
**dadurch gekennzeichnet, dass** das Rückflussverhinderungsventil (120)umfasst:
- einen Rückflusseingang (121),
- eine vom Rückflusseingang zum Rückflussausgang (122) weisende und sich in dieser Richtung verjüngende Flachtülle (123) mit zwei Seitenwänden (124 a, b) aus einem elastischen Material, und
- ein am Rückflusseingang des Rückflussverhinderungsventils oder an der Einlassöffnung angeordnetes, fluiddurchlässiges Sicherungselement (150).

3. Ventilanordnung (100) nach dem vorhergehenden Anspruch,
**dadurch gekennzeichnet, dass** das Sicherungselement (150) als im Wesentlichen scheibenförmiges Sieb ausgebildet und vorzugsweise mit dem Rückflusseingang (121) oder der Einlassöffnung (101) fest verbunden ist.

4. Ventilanordnung nach einem der vorhergehenden Ansprüche,
**gekennzeichnet durch** eine Spülvorrichtung zur Abgabe eines abzuführenden flüssigen Mediums, wobei vorzugsweise die Spülvorrichtung (160) ausgebildet ist, nach dem Sperren des Durchflussverhinderungsventils (110) eine dem Restanteil entsprechende Menge Medium abzugeben.

5. Ventilanordnung (100) nach dem vorhergehenden Anspruch,
**dadurch gekennzeichnet, dass** die Spülvorrichtung (160) ausgebildet ist, für ein Sperrzeitintervall nach dem Sperren des Durchflussverhinderungsventils (110) flüssiges Medium abzugeben, wobei das Sperrzeitintervall vorzugsweise derart bemessen ist, dass die Im Sperrzeitintervall abgegebene Menge Medium dem Restanteil entspricht.

6. Ventilanordnung (100) nach einem der beiden vorhergehenden Ansprüche,
**gekennzeichnet durch** einen Überlaufsensor (170), der ausgebildet ist, zu detektieren, dass oberhalb des Rückflussverhinderungsventils Medium angesammelt ist, und weiterhin vorzugsweise ausgebildet ist, in diesem Fall ein Signal zu generieren, wobei vorzugsweise die Steuerungsvorrichtung ausgebildet, das Durchflussverhinderungsventil zu öffnen, wenn sich Medium oberhalb des Rückflussverhinderungsventils angesammelt hat.

7. Ventilanordnung (100) nach einem der vorhergehenden Ansprüche,
**dadurch gekennzeichnet, dass** das Durchflussverhinderungsventil (110) als Schlauchventil ausgebildet ist mit
- einem Schlauchventilgehäuse (113),
- einem Durchflusseingang (111),
- einem Durchflussausgang (112) und
- einem sich zwischen dem Durchflusseingang und dem Durchflussausgang innerhalb des Schlauchventilgehäuses erstreckenden Medienleitkanal (114) aus einem elastischen Material,
wobei im Bereich des Durchflussverhinderungsventils zwischen dem Medienleltkanal und dem Schlauchventilgehäuse ein gasgefüllter Zwischenraum derart ausgebildet ist, dass der Medienleitkanal zumindest abschnittsweise zusammengepresst und damit das Durchflussverhinderungsventil geschlossen wird, wenn ein in dem gasgefüllten Zwischenraum ausgebildeter Gasdruck einen in dem Medienleitkanal herrschenden Gasdruck übersteigt und weiterhin
**gekennzeichnet durch** eine Sperrvorrichtung, die ausgebildet ist, den in dem gasgefüllten Zwischenraum ausgebildeten Gasdruck auf einem über dem in dem Medienleitkanal herrschenden Gasdruck zu halten.

8. Ventilanordnung (100, 100') nach einem der vorhergehenden Ansprüche,
**gekennzeichnet durch** eine Entlüftungsvorrichtung (600) zum Entlüften der Ventilanordnung (100. 100'), insbesondere des Rückflussverhinderungsventils (120, 120'), wobei vorzugsweise die Entlüftungsvorrichtung (600) eine Entlüftungsleitung (611 a, 611b) mit einem ersten (612) und einem zweiten (613) Ende umfasst, wobei das erste Ende (612) mit dem Rückflussverhinderungsventil (120, 120'), insbesondere mit einer Kammer (127, 127') des Rückflussverhinderungsventils (120, 120'), verbunden ist und wobei ferner vorzugsweise das zweite Ende (613) der Entlüftungsleitung (611a, 611 b) mit einer Abfuhrleitung (224, 224') eines Zwischenbehälters (223, 223') eines Urinals (200) verbindbar ist.

9. Ventilanordnung (100, 100') nach dem vorhergehenden Anspruch,
**dadurch gekennzeichnet, dass** in der Entlüftungsleitung (611a, 611 b) ein Rückschlagventil (610) angeordnet ist, das ausgebildet und angeordnet ist, einen Fluidstrom vom ersten (612) zum zweiten (613) Ende der Entlüftungsleitung (611a, 611b) zu ermöglichen und einen Fluidstrom vom zweiten zum ersten Ende der Entlüftungsleitung (611a, 611b) zu sperren, wobei vorzugsweise das Rückschlagventil (610) in Einbaulage im Wesentlichen senkrecht angeordnet ist und/oder in Einbaulage derart angeordnet ist, dass ein zweiter Abschnitt der Entlüftungsleitung (611b) zwischen dem zweiten Ende (613) und dem Rückschlagventil (610) länger ist als ein erster Abschnitt der Entlüftungsleitung (611a) zwischen dem ersten Ende (612) und dem Rückschlagventil (610).

10. Verfahren zur Steuerung einer Ventilanordnung (100),
umfassend die Schritte:
- Freigeben eines Durchflussverhinderungsventils (110) zur Abfuhr eines flüssigen Mediums, und
- Sperren des Durchflussverhinderungsventils (110),
**dadurch gekennzeichnet, dass** das Durchflussverhinderungsventil (110) derart gesperrt wird, dass ein Restanteil des abzuführenden Mediums in Schwerkraftrichtung im Wesentlichen oberhalb des Durchflussverhinderungsventils eine Sperrschicht bildet, deren Oberfläche (140) in Schwerkraftrichtung im Wesentlichen oberhalb eines Rückflussausgangs eines Rückflussverhinderungsventils (120) angeordnet ist.

11. Verfahren nach dem vorhergehenden Anspruch,
**dadurch gekennzeichnet, dass** vor Sperren des Durchflussverhinderungsventils (110) eine Spülvorrichtung (160) zur Abgabe eines flüssigen Mediums freigegeben wird, und wobei die Spülvorrichtung gesperrt wird nachdem das Durchflussverhinderungsventil gesperrt wurde und die Spülvorrichtung eine dem Restanteil entsprechende Menge Medium abgegeben hat.

12. Verfahren nach einem der beiden vorhergehenden Ansprüche,
**gekennzeichnet durch** den Schritt:
- Sperren der Spülvorrichtung (160) nachdem nach dem Sperren des Durchflussverhinderungsventils (110) ein Sperrzeitintervall vergangen ist, wobei das Sperrzeitintervall derart bemessen ist, dass die Spülvorrichtung im Sperrzeitintervall eine dem Restanteil entsprechende Menge Medium abgibt.

## Claims

1. Valve arrangement (100) for discharging a liquid medium, comprising
- an inlet orifice (101),
- an outlet orifice (102),
- an activatable flow prevention valve (110) disposed between the inlet and outlet orifice in the fitted position,
- a control device (130) which is configured to open or close the flow prevention valve for the flow of liquid medium,
**characterised by** a backflow prevention valve (120) disposed between the inlet and the outlet orifice and essentially above the flow prevention valve in the direction of gravity in the fitted position, with a backflow outlet (122) pointing essentially downwards in the direction of gravity in the fitted position, and further **characterised in that** the control device is configured to close the flow prevention valve in such a way that a residual amount of the medium to be discharged forms a barrier layer essentially above the flow prevention valve in the direction of gravity, the surface (140) of which is disposed essentially above the backflow outlet of the backflow prevention valve in the direction of gravity.

2. Valve arrangement (100) as claimed in the preceding claim,
**characterised in that** the backflow prevention valve (120) comprises:
- a backflow inlet (121),
- a flattened sleeve (123) pointing from the backflow inlet towards the backflow outlet (122) and tapering in this direction with two side walls (124a, b) made from an elastic material, and
- a fluid-permeable lock element (150) disposed on the backflow inlet of the backflow prevention valve or on the inlet orifice.

3. Valve arrangement (100) as claimed in the preceding claim,
**characterised in that** the lock element (150) is provided in the form of an essentially disc-shaped strainer and is preferably fixedly connected to the backflow inlet (121) or the inlet orifice (101).

4. Valve arrangement as claimed in one of the preceding claims,
**characterised by** a flushing device for dispensing a liquid medium to be discharged, which flushing device (160) is preferably configured to dispense a quantity of medium corresponding to the residual amount after the flow prevention valve (110) has been closed.

5. Valve arrangement (100) as claimed in the preceding claim,
**characterised in that** the flushing device (160) is configured to dispense liquid medium for a closed period after the flow prevention valve (110) has been closed, and the closed period is preferably set so that the quantity of medium dispensed during the closed period corresponds to the residual amount.

6. Valve arrangement (100) as claimed in one of the two preceding claims, **characterised by** an overflow sensor (170) which is configured to detect that medium has accumulated above the backflow prevention valve, and preferably also configured to generate a signal in this case, and the control device is preferably configured to open the flow prevention valve if medium has accumulated above the backflow prevention valve.

7. Valve arrangement (100) as claimed in one of the preceding claims,
**characterised in that** the flow prevention valve (110) is provided in the form of a pipe compression valve with
- a pipe compression valve housing (113),
- a flow inlet (111),
- a flow outlet (112) and
- a media carrying passage (114) made from an elastic material extending inside the pipe compression valve housing between the flow inlet and the flow outlet,
and a gas-filled intermediate cavity is disposed between the media carrying passage and the pipe compression valve housing in the region of the flow prevention valve so that the media carrying passage is pressed together in at least some regions and the flow prevention valve is therefore closed if a gas pressure generated in the gas-filled cavity exceeds a gas pressure prevailing in the media carrying passage, and further
**characterised by** a shut-off device which is designed to maintain the gas pressure generated in the gas-filled cavity at a gas pressure above that prevailing in the media carrying passage.

8. Valve arrangement (100, 100') as claimed in one of the preceding claims, **characterised by** a venting device (600) for venting the valve arrangement (100, 100'), in particular the backflow prevention valve (120, 120'), which venting device (600) preferably comprises a venting pipe (611 a, 611 b) with a first end (612) and a second end (613), and the first end (612) is connected to the backflow prevention valve (120, 120'), in particular to a chamber (127, 127') of the backflow prevention valve (120, 120'), and the second end (613) of the venting pipe (611 a, 611 b) can also preferably be connected to a discharge pipe (224, 224') of an intermediate container (223, 223') of a urinal (200).

9. Valve arrangement (100, 100') as claimed in the preceding claim,
**characterised in that** a check valve (610) is disposed in the venting pipe (611 a, 611 b), which is designed and disposed so as to permit a fluid flow from the first end (612) to the second end (613) of the venting pipe (611 a, 611 b) and block a fluid flow from the second end to the first end of the venting pipe (611 a, 611 b), and the check valve (610) is preferably disposed essentially vertically in the fitted position and/or, in the fitted position, is disposed in such a way that a second section of the venting pipe (611 b) between the second end (613) and the check valve (610) is longer than a first section of the venting pipe (611 a) between the first end (612) and the check valve (610).

10. Method of controlling a valve arrangement (100), comprising the steps:
- opening a flow prevention valve (110) for discharging a liquid medium,
and
- closing the flow prevention valve (110),
**characterised in that** the flow prevention valve (110) is closed in such a way that a residual amount of the medium to be discharged forms a barrier layer essentially above the flow prevention valve in the direction of gravity, the surface (140) of which is disposed essentially above a backflow outlet of a backflow prevention valve (120) in the direction of gravity.

11. Method as claimed in the preceding claim, **characterised in that** prior to closing the flow prevention valve (110), a flushing device (160) for dispensing a liquid medium is opened, and the flushing device is closed after the flow prevention valve has been closed and the flushing device has dispensed a quantity of medium corresponding to the residual amount.

12. Method as claimed in one of the two preceding claims, **characterised by** the step:
- closing the flushing device (160) after a closed period following closure of the flow prevention valve (110) has elapsed, and the closed period is set so that the flushing device dispenses a quantity of medium corresponding to the residual amount during the closed period.

## Revendications

1. Ensemble de vannes (100) servant à évacuer un milieu liquide, comprenant
- une ouverture d'admission (101),
- une ouverture d'évacuation (102),
- une vanne empêchant le passage (110) disposée en position de montage entre l'ouverture d'admission et l'ouverture d'évacuation, pouvant être commandée,
- un dispositif de commande (130) réalisé pour débloquer ou bloquer la vanne empêchant le passage destinée au passage du milieu liquide,
**caractérisé par** une vanne empêchant le reflux (120) disposée en position de montage entre l'ouverture d'admission et l'ouverture d'évacuation et disposée dans la direction de la pesanteur essentiellement au-dessus de la vanne empêchant le passage, dotée d'une sortie de reflux (122) dirigée essentiellement vers le bas en position de montage dans la direction de la pesanteur, et
**caractérisé en outre en ce que** le dispositif de commande est réalisé pour bloquer la vanne empêchant le passage de telle manière qu'une fraction résiduelle du milieu devant être évacué forme, dans la direction de la pesanteur, essentiellement au-dessus de la vanne empêchant le passage, une couche de blocage, dont la surface (140) est disposée dans la direction de la pesanteur, essentiellement au-dessus de la sortie de reflux de la vanne empêchant le reflux.

2. Ensemble de vannes (100) selon la revendication précédente,
**caractérisé en ce que** la vanne empêchant le reflux (120) comprend :
- une entrée de reflux (121),
- une douille plate (123) orientée depuis l'entrée de reflux en direction de la sortie de reflux (122) et se rétrécissant dans ladite direction, dotée de deux parois latérales (124a, 124b) constituées d'un matériau élastique, et
- un élément de sécurité (150) perméable aux fluides, disposé au niveau de l'entrée de reflux de la vanne empêchant le reflux ou au niveau de l'ouverture d'admission.

3. Ensemble de vannes (100) selon la revendication précédente,
**caractérisé en ce que** l'élément de sécurité (150) se présente essentiellement sous la forme d'un tamis présentant une forme de disque et est relié de manière solide de préférence à l'entrée de reflux (121) ou à l'ouverture d'admission (101).

4. Ensemble de vannes selon l'une quelconque des revendications précédentes, **caractérisé par** un dispositif de rinçage servant à distribuer un milieu liquide devant être évacué, dans lequel le dispositif de rinçage (160) est réalisé de préférence pour distribuer, après le blocage de la vanne empêchant le passage (110), une quantité de milieu correspondant à la fraction résiduelle.

5. Ensemble de vannes (100) selon la revendication précédente,
**caractérisé en ce que** le dispositif de rinçage (160) est réalisé pour délivrer sur un laps de temps dédié au blocage, après le blocage de la vanne empêchant le passage (110), un milieu liquide, dans lequel le laps de temps dédié au blocage est de préférence tel que la quantité de milieu distribuée au cours du laps de temps dédié au blocage correspond à la fraction résiduelle.

6. Ensemble de vannes (100) selon l'une quelconque des deux revendications précédentes, **caractérisé par** un capteur de débordement (170) qui est réalisé pour détecter l'accumulation de milieu au-dessus de la vanne empêchant le reflux et qui est réalisé en outre de préférence pour générer dans ce cas un signal, dans lequel le dispositif de commande est de préférence réalisé pour ouvrir la vanne empêchant le passage lorsque le milieu s'est accumulé au-dessus de la vanne empêchant le reflux.

7. Ensemble de vannes (100) selon l'une quelconque des revendications précédentes, **caractérisé en ce que** la vanne empêchant le passage (110) se présente sous la forme d'une vanne à tuyau flexible dotée
- d'un carter de vanne à tuyau flexible (113),
- d'une entrée de passage (111),
- d'une sortie de passage (112) et
- d'un conduit pour milieu (114) constitué d'un matériau élastique, lequel conduit s'étend à l'intérieur du carter de vanne à tuyau flexible entre l'entrée de passage et la sortie de passage,
dans lequel est réalisé dans la zone de la vanne empêchant le passage, entre le conduit pour milieu et le carter de vanne à tuyau flexible, un espace intermédiaire rempli de gaz de telle manière que le conduit pour milieu est comprimé au moins par sections et que ce faisant la vanne empêchant le passage est fermée lorsqu'une pression de gaz régnant dans l'espace intermédiaire rempli de gaz dépasse une pression de gaz régnant dans le conduit pour milieu, et en outre **caractérisé par** un dispositif de blocage réalisé pour maintenir la pression de gaz régnant dans l'espace intermédiaire rempli de gaz à une pression de gaz régnant dans le conduit pour milieu.

8. Ensemble de vannes (100, 100') selon l'une quelconque des revendications précédentes,
**caractérisé par** un dispositif d'aération (600) servant à aérer l'ensemble de vannes (100, 100'), en particulier la vanne empêchant le reflux (120, 120'), dans lequel de préférence le dispositif d'aération (600) comprend une conduite d'aération (611a, 611b) dotée d'une première extrémité (612) et d'une deuxième extrémité (613), dans lequel la première extrémité (612) est reliée à la vanne empêchant le reflux (120, 120'), en particulier à une chambre (127, 127') de la vanne empêchant le reflux (120, 120'), et dans lequel la deuxième extrémité (613) de la conduite d'aération (611a, 611b) peut en outre de préférence être reliée à une conduite d'évacuation (224, 224') d'un récipient intermédiaire (223, 223') d'un urinoir (200).

9. Ensemble de vannes (100, 100') selon la revendication précédente,
**caractérisé en ce qu'**une vanne anti-retour (610) est disposée dans la conduite d'aération (611a, 611b), laquelle vanne anti-retour est réalisée et disposée afin de permettre un écoulement de fluide depuis la première extrémité (612) vers la deuxième extrémité (613) de la conduite d'aération (611a, 611b) et afin de bloquer un écoulement de fluide depuis la deuxième extrémité vers la première extrémité de la conduite d'aération (611a, 611b), dans lequel de préférence la vanne anti-retour (610) est disposée en position de montage essentiellement de manière perpendiculaire et/ou est disposée en position de montage de telle manière qu'une deuxième section de la conduite d'aération (611b) située entre la deuxième extrémité (613) et la vanne anti-retour (610) est plus longue qu'une première section de la conduite d'aération (611a) située entre la première extrémité (612) et la vanne anti-retour (610).

10. Procédé servant à commander un ensemble de vannes (100), comprenant les étapes de :
- déblocage d'une vanne empêchant le passage (110) servant à évacuer un milieu liquide, et
- blocage de la vanne empêchant le passage (110),
**caractérisé en ce que** la vanne empêchant le passage (110) est bloquée de telle manière qu'une fraction résiduelle du milieu devant être évacué forme, dans la direction de la pesanteur, essentiellement au-dessus de la vanne empêchant le passage, une couche de blocage, dont la surface (140) est disposée, dans la direction de la pesanteur, essentiellement au-dessus d'une sortie de reflux d'une vanne empêchant le reflux (120).

11. Procédé selon la revendication précédente,
**caractérisé en ce qu'**un dispositif de rinçage (160) servant à distribuer un milieu liquide est débloqué avant le blocage de la vanne empêchant le passage (110), et dans lequel le dispositif de rinçage est bloqué après que la vanne empêchant le passage a été bloquée et après que le dispositif de rinçage a distribué une quantité de milieu correspondant à la fraction résiduelle.

12. Procédé selon l'une quelconque des deux revendications précédentes,
**caractérisé par** l'étape de :
- blocage du dispositif de rinçage (160) à la fin d'un laps de temps dédié au blocage après le blocage de la vanne empêchant le passage (110), dans lequel le laps de temps dédié au blocage est tel que le dispositif de rinçage distribue au cours du laps de temps dédié au blocage une quantité de milieu correspondant à la fraction résiduelle.
